# FASCICULE DE BREVET EUROPEEN

(11) **EP 1 147 934 B1**
(45) Date de publication et mention de la délivrance du brevet: **05.11.2003**
(21) Numéro de dépôt: 01401002.9
(22) Date de dépôt: 19.04.2001
(51) Int. Cl.: B60K 15/03, B60K 15/035

(54) **Réservoir à carburant de véhicule automobile**
Kraftstofftank für Kraftfahrzeug
Motor vehicle fuel tank

(30) Priorité: 20.04.2000 FR 0005098
(43) Date de publication de la demande: 24.10.2001
(73) Titulaire: COMPAGNIE PLASTIC OMNIUM, 69007 Lyon (FR)
(72) Inventeur: Rosseel, Alexis, 60200 Compiegne (FR)
(74) Mandataire: Tanty, François

(56) Documents cités:
- EP-A- 0 875 411
- DE-A- 3 018 242
- US-A- 4 304 530

## Description

La présente invention concerne un réservoir à carburant de véhicule automobile et un procédé pour sa fabrication. Les caractéristiques du préambule des revendications 1 et 28 sont connues du document EP-A-0 875 411.

Il est connu de réaliser un réservoir à carburant avec une enveloppe en matière thermoplastique soufflée, thermoformée ou rotomoulée par exemple.

Une telle enveloppe peut comprendre une couche formant barrière vis-à-vis des hydrocarbures, de façon à limiter les pertes d'hydrocarbures par diffusion à travers l'enveloppe.

Une telle couche formant barrière est par exemple réalisée en EVOH.

Il existe un besoin pour fixer des éléments, tels qu'une valve de mise à l'air ou de dégazage par exemple, sur la face intérieure de l'enveloppe du réservoir, que ce dernier comporte ou non une couche formant barrière.

Le cas échéant, la fixation doit se faire sans endommager la couche formant barrière.

De plus, la fiabilité d'une telle fixation doit être assurée pendant la durée de vie du réservoir, malgré les vibrations auxquelles le réservoir est soumis et les éventuelles variations dimensionnelles de l'enveloppe, sous l'effet notamment du gonflement de la matière thermoplastique au contact des hydrocarbures.

La présente invention vise notamment à assurer une fixation fiable.

Elle y parvient grâce à un nouveau réservoir à carburant de véhicule automobile comportant une enveloppe et, à l'intérieur de celle-ci, au moins un élément rapporté tel qu'une valve, par exemple. L'enveloppe présente un relief, et l'élément rapporté est fixé à l'enveloppe au moyen d'un élément intermédiaire comportant au moins une partie élastiquement déformable agencée pour se fixer après déformation élastique dans ou sur ledit relief, afin de maintenir l'élément intermédiaire sur l'enveloppe. L'élément rapporté est agencé pour se fixer sur l'élément intermédiaire de manière à empêcher la partie élastiquement déformable de l'élément intermédiaire de subir une déformation élastique inverse lui permettant de se désengager dudit relief.

La partie élastiquement déformable de l'élément intermédiaire est immobilisée dans une position prédéterminée lorsque l'élément rapporté est fixé sur l'élément intermédiaire, et ainsi immobilisée elle s'oppose à tout déplacement de l'élément intermédiaire dans le sens d'un désengagement du relief de l'enveloppe du réservoir.

L'invention permet donc de réaliser un système de verrouillage efficace de la fixation de l'élément intermédiaire dans ou sur le relief de l'enveloppe du réservoir, et par conséquent d'assurer un maintien stable de l'élément rapporté.

Dans une réalisation préférée, le relief définit un logement dans lequel la partie élastiquement déformable de l'élément intermédiaire est apte à s'engager.

Toujours dans une réalisation particulière, le logement précité communique avec un passage latéral permettant d'accueillir une extension latérale de l'élément intermédiaire ou de l'élément rapporté.

Ainsi, on peut constituer un détrompeur qui permet de garantir une orientation prédéterminée de l'élément rapporté lors de sa fixation sur l'enveloppe du réservoir.

De plus, on peut gagner le cas échéant en compacité en diminuant l'encombrement axial de l'élément rapporté, puisqu'il est possible grâce au passage précité d'amener la portion de l'élément rapporté constituant l'extension latérale précitée au voisinage de l'enveloppe du réservoir.

Cette réalisation permet également de fixer l'élément rapporté sensiblement au point le plus haut du réservoir, ce qui est particulièrement avantageux lorsque l'élément rapporté est une valve de mise à l'air ou de dégazage.

Dans une réalisation particulière, l'extension latérale en question est constituée par un embout de raccordement à un tuyau.

Le passage accueillant l'embout est alors avantageusement délimité par des parois sensiblement parallèles à l'axe de celui-ci.

Toujours dans une réalisation particulière, l'ouverture du logement par laquelle est introduit l'élément intermédiaire est non symétrique de révolution, ce qui permet d'immobiliser l'élément intermédiaire dans une position angulaire prédéterminée lorsque celui-ci est engagé dans le logement. En variante, cette ouverture peut être symétrique de révolution.

Dans une réalisation particulière, l'élément intermédiaire est agencé pour s'encliqueter dans le logement suivant la direction axiale de celui-ci.

L'élément intermédiaire peut ainsi comporter des pattes de fixation élastiquement déformables, aptes à s'encliqueter dans le logement précité.

L'élément intermédiaire peut ainsi être fixé à l'enveloppe du réservoir de manière simple et rapide.

Dans une réalisation particulière, l'élément intermédiaire présente au moins deux pattes élastiques ménageant un espace entre elles et agencées pour s'encliqueter dans le logement formé par l'enveloppe du réservoir, l'élément rapporté comportant une partie de verrouillage apte à s'engager dans ledit espace de manière à empêcher les pattes de se rapprocher et de se désengager du logement.

Cette réalisation est avantageuse du fait que l'enveloppe du réservoir est susceptible de subir des variations dimensionnelles pendant sa vie.

En l'absence de la partie de verrouillage précitée, les pattes risqueraient de se désengager du logement dans lequel elles ont été introduites.

Dans une réalisation particulière, l'élément intermédiaire comporte deux paires de pattes élastiques, chaque paire étant disposée en regard de l'autre, les pattes d'une même paire étant disposées de manière à venir au contact d'une même face du logement.

En variante, l'élément intermédiaire s'étend suivant un axe longitudinal et comporte une pluralité de pattes élastiques disposées équiangulairement autour de cet axe longitudinal.

Toujours dans une réalisation particulière, le logement présente en section axiale une forme de queue d'aronde et les pattes présentent une forme aplatie, coudée vers l'extérieur, de façon à épouser sensiblement la forme des faces intérieures du logement.

Cette configuration permet d'avoir une large surface d'appui entre les pattes élastiques et les faces intérieures du logement et améliore la fiabilité de la fixation.

Avantageusement, l'élément rapporté est agencé pour s'encliqueter sur l'élément intermédiaire.

Dans une réalisation particulière, l'élément intermédiaire comporte un corps tubulaire avec, à une extrémité, la partie élastiquement déformable destinée à s'engager dans le logement précité et l'élément rapporté est agencé pour se fixer à l'intérieur de ce corps tubulaire.

De préférence, l'élément intermédiaire et l'élément rapporté comportent des reliefs agencés pour coopérer et permettre un préassemblage de l'élément rapporté dans l'élément intermédiaire avant la fixation de ce dernier sur l'enveloppe de réservoir.

Avantageusement, le corps tubulaire de l'élément intermédiaire comporte des évidements et l'élément rapporté des dents aptes à s'encliqueter dans ces évidements.

De préférence, l'élément intermédiaire comporte un premier ensemble d'évidements disposés de manière à permettre le maintien de l'élément rapporté dans une première position par rapport à l'élément intermédiaire, permettant la mise en place de ce dernier sur l'enveloppe de réservoir, et un deuxième ensemble d'évidements permettant le maintien de l'élément rapporté dans l'élément intermédiaire dans une seconde position par rapport à l'élément intermédiaire, cette seconde position de l'élément rapporté empêchant l'élément intermédiaire de se détacher de l'enveloppe de réservoir.

On obtient ainsi un moyen de fixation simple et économique de l'élément rapporté dans l'élément intermédiaire.

Dans une réalisation particulière, l'élément rapporté comporte un embout et le corps tubulaire de l'élément intermédiaire présente une fenêtre pour le passage de cet embout.

Avantageusement, cette fenêtre s'étend en retrait de l'extrémité du corps tubulaire située à l'opposé de la partie élastiquement déformable.

Ainsi, l'élément intermédiaire conserve une bonne résistance mécanique grâce à la bande de matière située entre la fenêtre précitée et l'extrémité du corps tubulaire.

Dans une réalisation particulière, l'enveloppe est réalisée par soufflage en matière thermoplastique. Avantageusement, l'enveloppe comporte alors au moins une couche formant barrière vis-à-vis des hydrocarbures.

Dans une réalisation particulière, le relief destiné à la fixation de l'élément intermédiaire est obtenu au moyen d'une forme prédéterminée donnée à l'enceinte de soufflage.

En variante, le relief est obtenu par surmoulage d'un insert.

Cette réalisation est avantageuse car l'insert peut former une armature s'opposant à d'éventuelles variations dimensionnelles de l'enveloppe.

En variante encore, le relief est obtenu en rapportant sur la surface de l'enveloppe un organe de fixation, lequel peut être soudé sur cette surface.

L'élément rapporté est constitué, par exemple, par une valve ou un clapet.

L'invention a également pour objet un procédé de fabrication d'un réservoir à carburant de véhicule automobile, comportant les étapes suivantes :
a) réaliser par conformation de matière plastique, notamment par soufflage, thermoformage, rotomoulage ou par injection de matière thermoplastique, une enveloppe,
b) réaliser un relief sur l'enveloppe, pendant ou après la formation de l'enveloppe,
c) fixer sur ce relief un élément intermédiaire pourvu d'au moins une partie élastiquement déformable agencée pour s'engager par déformation élastique dans ou sur ce relief, afin de retenir l'élément intermédiaire sur l'enveloppe,
d) fixer sur l'enveloppe de réservoir en même temps que l'élément intermédiaire, ou dans un deuxième temps, un élément rapporté sur cet élément intermédiaire, cet élément rapporté étant apte à empêcher la partie élastiquement déformable de l'élément intermédiaire d'effectuer un mouvement lui permettant de se désengager dudit relief.

Après la mise en place de l'élément intermédiaire seul sur l'enveloppe de réservoir, on peut fixer l'élément rapporté sur l'élément intermédiaire pour empêcher la partie élastiquement déformable de l'élément intermédiaire d'effectuer un mouvement lui permettant de se désengager du relief.

En variante, on peut préassembler l'élément rapporté et l'élément intermédiaire avant de mettre en place ce dernier sur le relief, fixer ensuite l'élément intermédiaire sur le relief et enfin déplacer l'élément rapporté par rapport à l'élément intermédiaire de manière à ce que l'élément rapporté empêche la partie élastiquement déformable de l'élément intermédiaire d'effectuer un mouvement lui permettant de se désengager du relief.

D'autres caractéristiques et avantages de la présente invention ressortiront à la lecture de la description détaillée qui va suivre, d' exemples de réalisation non limitatifs, et à l'examen du dessin annexé, sur lequel :
- la figure 1 est une vue schématique et partielle, en perspective, d'une enveloppe de réservoir présentant un logement, conforme à un premier exemple de réalisation de l'invention,
- la figure 2 est une vue schématique en perspective d'un élément intermédiaire destiné à s'engager dans le logement de la figure 1,
- la figure 3 est une vue schématique en coupe du logement de la figure 1, l'élément intermédiaire de la figure 2 étant représenté en place dans le logement,
- la figure 4 représente schématiquement un élément rapporté préassemblé avec l'élément intermédiaire,
- la figure 5 représente schématiquement l'élément rapporté fixé définitivement dans l'élément intermédiaire,
- la figure 6 est une vue partielle et schématique, en perspective, de l'enveloppe du réservoir équipée de l'élément intermédiaire et de l'élément rapporté,
- la figure 7 représente schématiquement et partiellement, en perpective, une enveloppe de réservoir présentant un logement, conforme à un deuxième exemple de réalisation de l'invention,
- la figure 8 est une vue schématique et partielle, en perpective, d'une enveloppe de réservoir présentant un logement, selon un troisième exemple de réalisation de l'invention,
- la figure 9 est une variante de réalisation du logement de la figure 8, et
- la figure 10 représente schématiquement, en perspective, une variante de réalisation de l'élément intermédiaire de la figure 2.

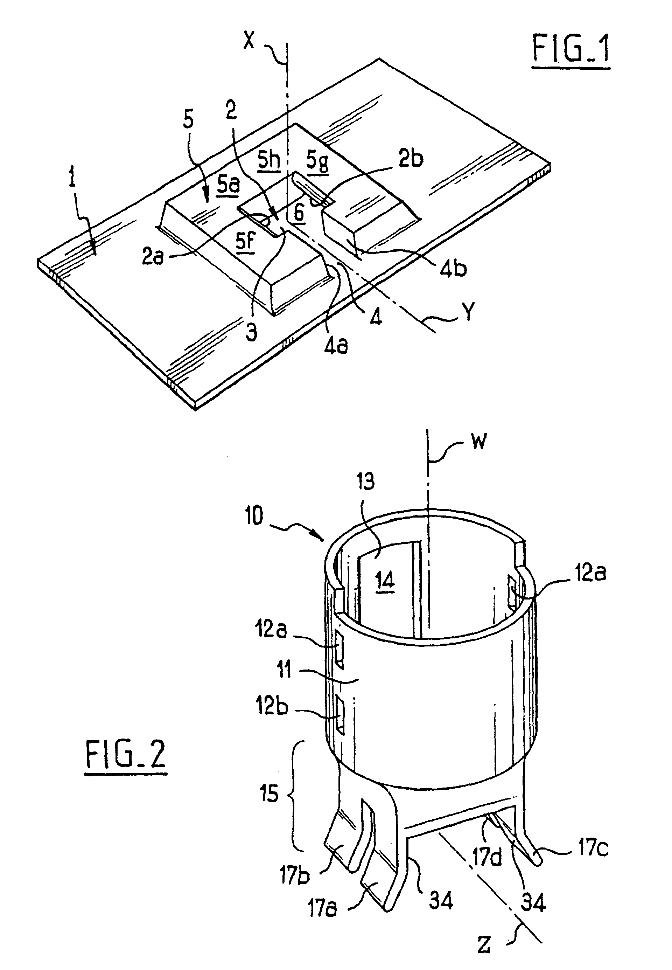

On a représenté partiellement sur la figure 1 une enveloppe 1 constituant la paroi d'un réservoir à carburant pour véhicule automobile.

Cette enveloppe 1, obtenue ici par soufflage d'une paraison, présente une structure multicouche composée successivement d'une première couche d'un thermoplastique, par exemple du polyéthylène haute densité, d'une couche formant barrière vis-à-vis des hydrocarbures, par exemple l'EVOH, et d'une deuxième couche d'un thermoplastique, par exemple du polyéthylène haute densité.

L'enveloppe 1 présente un logement 2 d'axe X défini par un relief 5 formant saillie sur la surface intérieure de l'enveloppe 1 et communiquant avec l'intérieur du réservoir par une ouverture supérieure 3 et par un passage latéral 4 d'axe Y perpendiculaire à X.

Le relief 5 est obtenu dans l'exemple décrit, en donnant une forme appropriée à l'enceinte de soufflage.

Dans une variante non illustrée, le relief 5 est obtenu par surmoulage d'un insert non représenté, disposé dans l'enceinte de soufflage.

Lors du soufflage, l'enveloppe issue de la paraison se plaque sur l'insert et en épouse sensiblement la forme.

En donnant une forme particulière à l'insert, on peut réaliser un relief tel que celui représenté sur la figure 1, permettant l'accrochage d'un élément rapporté à l'intérieur du réservoir, comme cela sera décrit dans la suite.

En variante encore, l'enveloppe 1 est réalisée par moulage par injection et le relief 5 est obtenu grâce à la forme du moule.

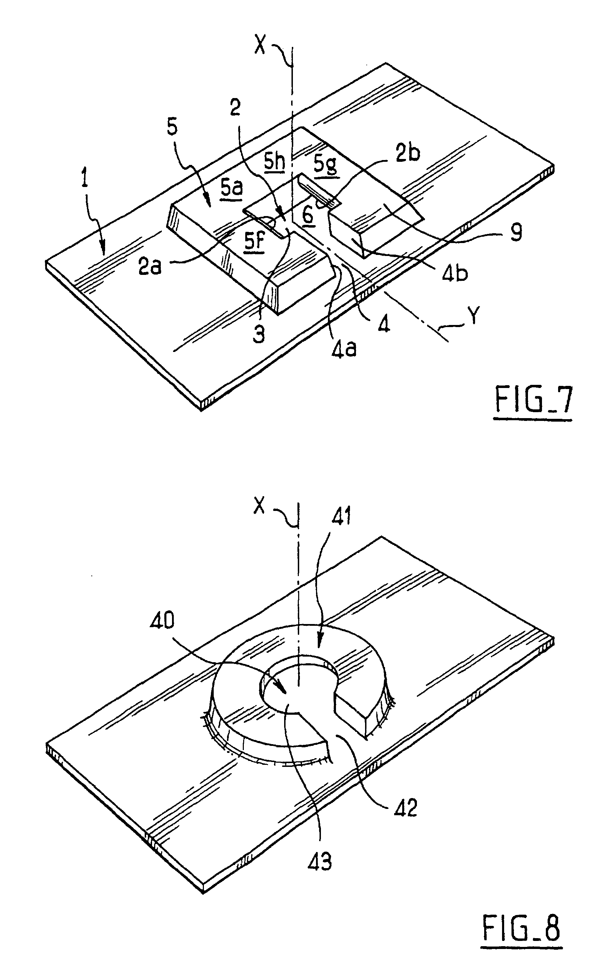

Dans une autre variante illustrée à la figure 7, le relief 5 est formé par un organe de fixation 9 rapporté sur la surface intérieure de l'enveloppe 1 et soudé à celle-ci.

Le relief 5 présente une face frontale 5a ayant lorsqu'observée dans l'axe X du logement 2 une forme en U dont les extrémités des deux branches 5f et 5g sont repliées l'une vers l'autre, de façon à former le passage latéral 4, lequel est délimité par deux surfaces 4a et 4b parallèles à l'axe Y.

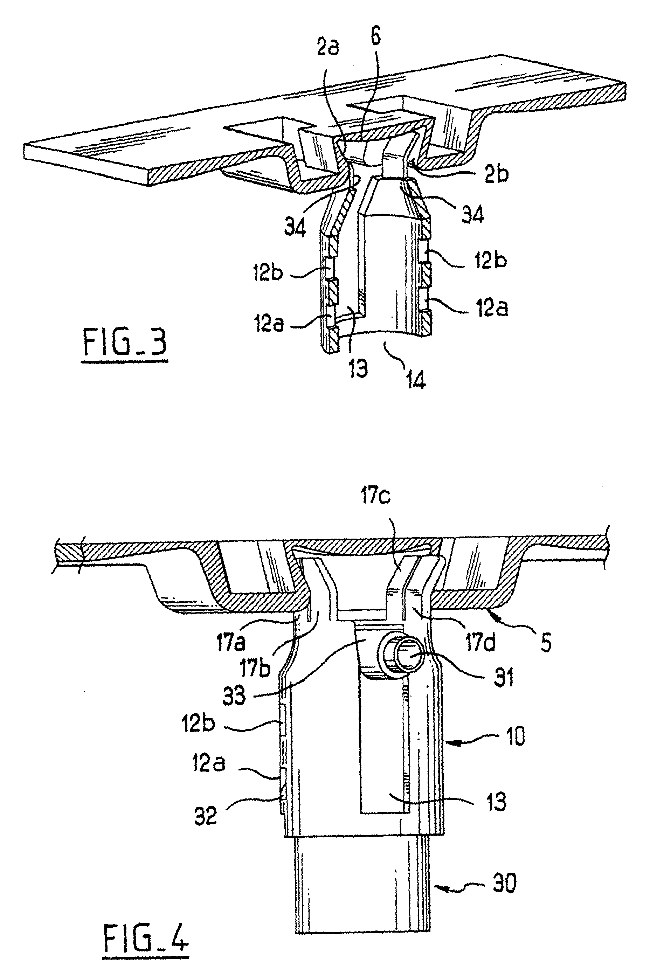

Le logement 2 est délimité latéralement par deux faces opposées 2a et 2b divergeant en rapprochement du fond 6 du logement, comme on peut le voir sur la figure 3.

Le logement 2 présente, suivant une coupe transversale perpendiculaire à l'axe Y, une forme de queue d'aronde.

On a représenté sur la figure 2 un élément intermédiaire 10 apte à se fixer dans le logement 2.

L'élément intermédiaire 10 comporte un corps sensiblement tubulaire 11, et à l'extrémité inférieure de ce corps 11, une partie déformable 15.

L'extrémité supérieure du corps 11 présente une ouverture circulaire 14.

Dans l'exemple décrit, le corps 11 présente une section transversale circulaire d'axe W, est traversé par des paires d'évidements 12a et 12b et par une fenêtre longitudinale 13.

Les deux évidements 12a sont diamétralement opposés. Il en est de même des évidements 12b.

Les évidements 12a sont situés à proximité de l'ouverture 14, les évidements 12b étant axialement plus éloignés de celle-ci.

Chacun des évidements 12a se situe sur la même génératrice du corps 11 qu'un évidement 12b.

L'élément intermédiaire 10 est destiné à recevoir un élément rapporté 30, constitué dans l'exemple décrit par une valve, comme on peut le voir notamment sur les figures 4 à 6.

L'élément rapporté 30 comporte un embout 31 destiné au raccordement d'un tuyau non représenté.

La partie déformable 15 comporte quatre pattes élastiques 17a à 17d réalisées d'un seul tenant avec le corps 11 de l'élément intermédiaire 10 par moulage de matière plastique.

Les pattes 17a à 17d présentent chacune une forme aplatie coudée vers l'extérieur, la ligne de pliage des pattes s'étendant parallèlement à un axe Z, perpendiculaire à l'axe W du corps 11.

Les pattes 17a et 17b d'une part, et 17c et 17d d'autre part, sont regroupées par paires, dans l'alignement l'une de l'autre, chaque paire de pattes étant destinée à venir au contact d'une face 2a ou 2b du logement 2.

Les pattes 17a à 17d peuvent franchir par déformation élastique l'ouverture 3 du logement 2, puis en reprenant leur forme initiale, s'appliquer contre les faces 5a et 5b du logement 2 pour maintenir l'élément intermédiaire 10 sur l'enveloppe 1 du réservoir.

Lorsque l'élément intermédiaire 10 est en place dans le logement 2, les régions des pattes 17a à 17d qui s'étendent sous leur ligne de pliage viennent au contact des faces 2a et 2b du logement 2 et s'opposent à un désengagement de l'élément intermédiaire 10.

L'axe Z est alors sensiblement parallèle à l'axe Y, et l'axe W est sensiblement parallèle à l'axe X.

Par ailleurs, la largeur des pattes constituant chaque paire ainsi que leur écartement sont choisis de manière à ce que l'élément intermédiaire 10 soit immobilisé dans le sens de l'axe Y dans le relief 5 entre la base 5h du U et les extrémités recourbées des branches 5f et 5g du U.

Comme indiqué plus haut, l'élément rapporté 30 est agencé pour s'engager dans l'élément intermédiaire 10.

L'élément rapporté 30 comporte, au niveau de son extrémité par laquelle il est introduit dans l'élément intermédiaire 10, une partie 33 présentant deux faces opposées 33a et 33b destinées à s'appliquer sur les faces 34 en vis-à-vis des pattes 17a à 17d.

Ainsi, lorsque la partie 33 est engagée dans l'espace compris entre ces pattes, ces dernières sont empêchées par la partie 33 de se déformer en rapprochement les unes des autres, ce qui verrouille l'élément intermédiaire 10 dans le logement 2.

Par ailleurs, l'élément rapporté 30 comporte deux dents 32 diamétralement opposées qui peuvent venir s'encliqueter soit dans les évidements 12a, soit dans les évidements 12b selon que l'on introduit partiellement ou complètement l'élément rapporté 30 dans l'élément intermédiaire 10.

La mise en place de l'élément rapporté 30 peut s'effectuer de deux manières.

Dans une première façon de faire, on fixe d'abord l'élément intermédiaire 10 seul dans le logement 2, comme on peut le voir sur la figure 3.

Puis, on met en place l'élément rapporté 30 dans l'élément intermédiaire 10.

Pour cela, on commence par engager l'embout 31 dans la fenêtre 13 et l'on fait glisser l'embout 31 jusqu'à ce qu'il s'engage entre les faces 4a et 4b du passage 4.

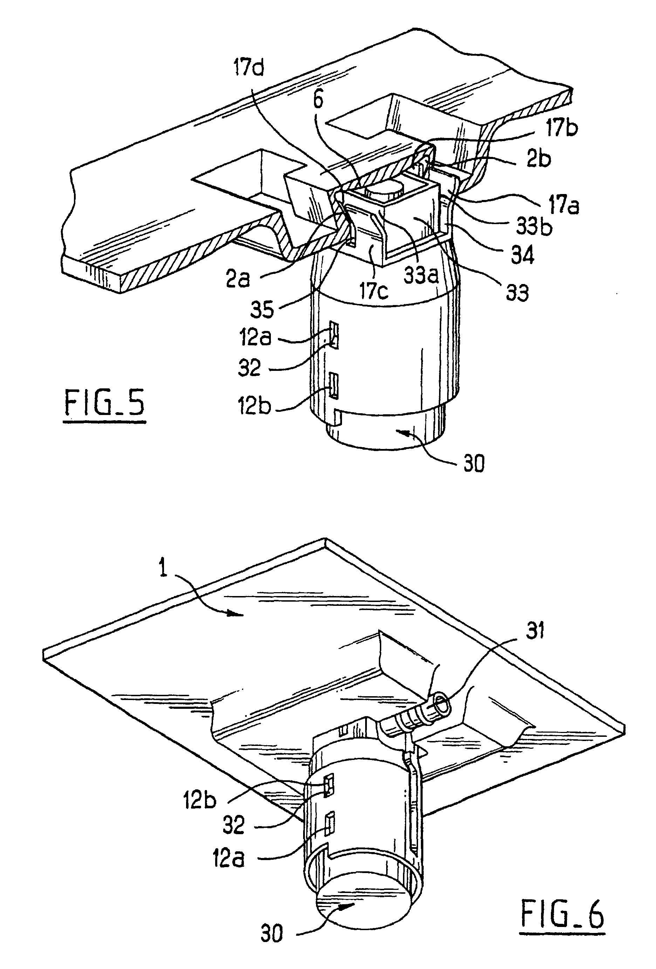

L'axe de l'embout 31 est alors sensiblement parallèle à l'axe Y, comme on peut le voir sur la figure 6.

Les dents 32 s'engagent dans les évidements 12b et les faces 33a et 33b de la partie 33 s'appliquent sur les faces 34 des pattes, ce qui verrouille l'élément intermédiaire 10 dans le logement 2.

Dans une seconde façon de fixer l'élément rapporté 30 sur l'enveloppe de réservoir, on préassemble d'abord à part l'élément rapporté 30 et l'élément intermédiaire 10 en introduisant l'embout 31 dans la fenêtre 13 et en engageant l'élément rapporté 30 dans l'élément intermédiaire 10 jusqu'à ce que les dents 32 viennent s'encliqueter dans les évidements 12a.

On introduit ensuite l'élément intermédiaire 10 dans le logement 2, les pattes 17a à 17d franchissant par déformation élastique l'ouverture 3 du logement 2.

La figure 4 illustre la position relative des différents éléments à l'issue de cette étape.

Enfin, on pousse l'élément rapporté 30 vers le logement 2 de manière à ce que les dents 32 viennent s'encliqueter dans les évidements 12b et que la partie 33 de l'élément rapporté 30 s'engage dans l'espace compris entre les pattes 17a et 17d.

On se trouve alors dans la configuration des figures 5 et 6.

De préférence, l'écartement entre les faces 4a et 4b correspond sensiblement au diamètre extérieur du tuyau destiné à être monté sur l'embout 31.

La partie 33 de l'élément rapporté 30 comporte des dents 35 qui viennent s'encliqueter chacune sur le bord d'une fente séparant deux pattes 17a et 17b ou 17c et 17d.

Lorsque l'on observe l'élément rapporté 30 dans l'axe de l'embout 31, les dents 35 présentent des surfaces convergeant en direction du fond du logement 6.

Ces surfaces, en venant en appui sur les bords de l'ouverture 3 du logement 2, contribuent à immobiliser axialement l'élément intermédiaire 10 dans le logement 2, ce qui permet d'éviter tout jeu axial ainsi que l'usure et le bruit qui résulteraient d'un jeu résiduel de montage de l'élément intermédiaire 10 sur l'enveloppe 1 du réservoir.

Bien entendu, l'invention n'est pas limitée aux exemples de réalisation qui viennent d'être décrits.

On peut notamment fixer au moyen d'un élément intermédiaire selon l'invention tout type d'élément rapporté, autre qu'une valve, par exemple une pompe, un filtre ou un élément d'une jauge à carburant.

En outre, l'invention n'est pas limitée à une forme particulière de relief servant à la fixation de l'élément intermédiaire et de l'élément rapporté.

On peut ainsi varier la forme du relief de façon à former un logement ayant une ouverture circulaire par exemple, interrompue ou non pour le passage d'une extension latérale de l'élément rapporté, par exemple un embout.

On a représenté sur la figure 8 une enveloppe de réservoir comportant un relief 41 définissant un logement 40 muni d'une ouverture supérieure circulaire 43.

Le relief 41 peut être obtenu de différentes manières, comme cela a été décrit pour le relief 5.

Dans l'exemple de la figure 8, le relief 41 comporte une paroi annulaire interrompue de manière à former un passage latéral 42 destiné à recevoir un embout, à l'instar du passage 4 décrit précédemment.

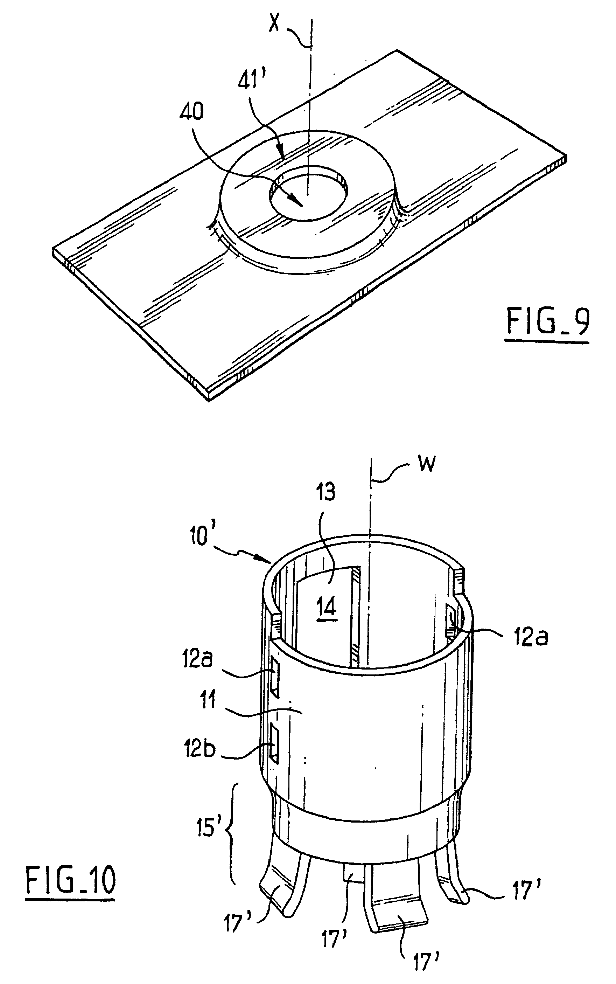

En variante, comme représenté à la figure 9, le relief 41' comporte une paroi annulaire continue.

On peut encore modifier la manière dont l'élément rapporté vient se fixer sur l'élément intermédiaire, ainsi que la forme de la partie élastiquement déformable de l'élément intermédiaire.

On a représenté sur la figure 10, un élément intermédiaire 10' apte à s'engager dans le logement 40, sensiblement analogue à l'élément intermédiaire 10 et se différenciant de celui-ci par le fait que la partie élastiquement déformable 15' est tubulaire de révolution d'axe W.

La partie déformable 15' comporte quatre pattes 17' analogues aux pattes 17a à 17d précédemment décrites mais disposées équiangulairement autour de l'axe W.

Le relief de l'enveloppe peut encore être formé par un ou plusieurs plots, lesquels définissent éventuellement entre eux un logement permettant d'accueillir une partie de l'élément intermédiaire.

## Revendications

1. Réservoir à carburant de véhicule automobile, comportant une enveloppe (1) et, à l'intérieur de celle-ci, au moins un élément rapporté (30) tel qu'une valve, l'enveloppe (1) présentant un relief (5 ; 41 ; 41'), l'élément rapporté (30) étant fixé à l'enveloppe (1) au moyen d'un élément intermédiaire (10 ; 10') comportant au moins une partie élastiquement déformable (15) agencée pour se fixer après déformation élastique dans ou sur ledit relief (5; 41; 41'), afin de maintenir l'élément intermédiaire (10 ; 10') sur l'enveloppe, **caractérisé par le fait que** l'élément rapporté (30) est agencé pour se fixer sur l'élément intermédiaire (10 ; 10') de manière à empêcher la partie élastiquement déformable (15) de l'élément intermédiaire (10 ; 10') de subir une déformation élastique inverse lui permettant de se désengager dudit relief (5 ; 41 ; 41').

2. Réservoir selon la revendication précédente, **caractérisé par le fait que** ledit relief (5) définit un logement (2) dans lequel la partie élastiquement déformable (15) de l'élément intermédiaire (10) est apte à s'engager.

3. Réservoir selon la revendication précédente, **caractérisé par le fait que** le logement (2) communique avec un passage latéral (4) permettant d'accueillir une extension latérale (31) de l'élément intermédiaire (10) ou de l'élément rapporté (30).

4. Réservoir selon la revendication précédente, **caractérisé par le fait que** l'extension latérale (31) est constituée par un embout (31) de l'élément rapporté (30).

5. Réservoir selon la revendication précédente, **caractérisé par le fait que** le passage (4) est délimité par des parois (4a, 4b) sensiblement parallèles à l'axe de l'embout.

6. Réservoir selon l'une quelconque des revendications 2 à 5, **caractérisé par le fait que** l'ouverture (3) du logement (2) par laquelle est introduit l'élément intermédiaire (10) est non symétrique de révolution.

7. Réservoir selon l'une quelconque des revendications 2 à 5, **caractérisé par le fait que** l'ouverture du logement (43) est symétrique de révolution.

8. Réservoir selon l'une quelconque des revendications 2 à 7, **caractérisé par le fait que** l'élément intermédiaire (10, 10') est agencé pour s'encliqueter dans ledit logement suivant la direction axiale de celui-ci.

9. Réservoir selon l'une quelconque des revendications 2 à 8, **caractérisé par le fait que** l'élément intermédiaire (10) comporte des pattes de fixation (17a, 17b, 17c, 17d) élastiquement déformables, aptes à s'encliqueter dans le logement (2).

10. Réservoir selon l'une quelconque des revendications 2 à 9, **caractérisé par le fait que** l'élément intermédiaire (10) présente au moins deux pattes élastiques (17a, 17c ; 17b, 17d) ménageant un espace entre elles, agencées pour s'encliqueter dans le logement (2) et **par le fait que** l'élément rapporté (30) comporte une partie (33) apte à s'engager dans ledit espace, de manière à empêcher les pattes de se rapprocher et de se désengager du logement.

11. Réservoir selon la revendication précédente, **caractérisé par le fait que** l'élément intermédiaire comporte deux paires de pattes élastiques (17a, 17b ; 17c, 17d), en regard l'une de l'autre, les pattes d'une même paire (17a, 17b ; 17c, 17d) étant disposées de manière à venir au contact d'une même face (2a ; 2b) du logement (2).

12. Réservoir selon la revendication 10, l'élément intermédiaire s'étendant suivant un axe longitudinal (W), **caractérisé par le fait que** l'élément intermédiaire (10') comporte une pluralité de pattes élastiques (17') disposées équiangulairement autour dudit axe longitudinal (W).

13. Réservoir selon l'une quelconque des revendications 9 à 13, **caractérisé par le fait que** le logement (2) présente en section une forme de queue d'aronde et **par le fait que** les pattes (17a, 17b, 17c, 17d) présentent une forme aplatie coudée vers l'extérieur, de façon à épouser sensiblement la forme des faces intérieures (2a ; 2b) du logement (2).

14. Réservoir selon l'une quelconque des revendications précédentes, **caractérisé par le fait que** l'élément rapporté (30) est agencé pour s'encliqueter sur l'élément intermédiaire (10).

15. Réservoir selon l'une quelconque des revendications précédentes, **caractérisé par le fait que** l'élément intermédiaire (10) comporte un corps tubulaire (11) avec à une extrémité la partie élastiquement déformable (15) et **par le fait que** l'élément rapporté (30) est agencé pour se fixer à l'intérieur de ce corps tubulaire (11).

16. Réservoir selon l'une quelconque des revendications précédentes, **caractérisé par le fait que** l'élément intermédiaire et l'élément rapporté comportent des reliefs agencés pour coopérer et permettre un préassemblage de l'élément rapporté dans l'élément intermédiaire avant la fixation de ce dernier sur l'enveloppe de réservoir.

17. Réservoir selon la revendication 15 et éventuellement la revendication 16, **caractérisé par le fait que** le corps tubulaire de l'élément intermédiaire comporte des évidements (12a, 12b) et l'élément rapporté des dents (32) aptes à s'encliqueter dans ces évidements (12a, 12b).

18. Réservoir selon la revendication 16, **caractérisé par le fait que** l'élément intermédiaire comporte un premier ensemble d'évidements (12b) disposés de manière à permettre le maintien de l'élément rapporté (30) dans une première position par rapport à l'élément intermédiaire (10), permettant la mise en place de ce dernier sur l'enveloppe de réservoir, et un deuxième ensemble d'évidements (12a) permettant le maintien de l'élément rapporté dans l'élément intermédiaire dans une seconde position par rapport à l'élément intermédiaire (10), cette seconde position de l'élément rapporté empêchant l'élément intermédiaire de se détacher de l'enveloppe de réservoir.

19. Réservoir selon la revendication 15 et l'une quelconque des revendications 16 à 18, **caractérisé par le fait que** l'élément rapporté (30) comporte un embout (31) et **par le fait que** le corps tubulaire (11) comporte une fenêtre (13) pour le passage de cet embout (31).

20. Réservoir selon la revendication précédente, **caractérisé par le fait que** la fenêtre (13) s'étend en retrait de l'extrémité du corps tubulaire (11) située à l'opposé de la partie élastiquement déformable (15).

21. Réservoir selon l'une quelconque des revendications précédentes, **caractérisé par le fait que** l'enveloppe (1) est réalisée par soufflage de matière thermoplastique.

22. Réservoir selon la revendication précédente, **caractérisé par le fait que** l'enveloppe comporte au moins une couche formant barrière vis-à-vis des hydrocarbures.

23. Réservoir selon l'une quelconque des deux revendications immédiatement précédentes, **caractérisé par le fait que** le relief (5) est obtenu au moyen d'une forme prédéterminée donnée à l'enceinte de soufflage.

24. Réservoir selon l'une quelconque des revendications 21 et 23, **caractérisé par le fait que** le relief est obtenu par surmoulage d'un insert.

25. Réservoir selon l'une quelconque des revendications 1 à 22, **caractérisé par le fait que** le relief est obtenu en rapportant sur la surface de l'enveloppe un organe de fixation.

26. Réservoir selon la revendication précédente, **caractérisé par le fait que** ledit organe de fixation est soudé sur ladite surface.

27. Réservoir selon l'une quelconque des revendications précédentes, **caractérisé par le fait que** l'élément rapporté (30) est constitué par une valve.

28. Procédé de fabrication d'un réservoir à carburant de véhicule automobile, comportant les étapes suivantes :
a) réaliser par conformation de matière plastique, notamment par soufflage, thermoformage, rotomoulage ou par moulage par injection de matière thermoplastique, une enveloppe (1),
b) réaliser un relief (5) sur l'enveloppe, pendant ou après la formation de l'enveloppe,
c) fixer sur ce relief (5) un élément intermédiaire (10) pourvu d'au moins une partie élastiquement déformable (15) agencée pour s'engager par déformation élastique dans ou sur ce relief, afin de retenir l'élément intermédiaire (10) sur l'enveloppe (1),
d) fixer sur l'enveloppe de réservoir en même temps que l'élément intermédiaire, ou dans un deuxième temps, un élément rapporté (30), **characterisé par le fait que** cet élément rapporté (30) est apte à empêcher la partie élastiquement déformable (15) de l'élément intermédiaire (10) d'effectuer un mouvement lui permettant de se désengager dudit relief (5).

29. Procédé selon la revendication immédiatement précédente, **caractérisé par le fait que** l'on fixe l'élément rapporté (30) sur l'élément intermédiaire (10) après la mise en place de ce dernier sur l'enveloppe de réservoir pour empêcher la partie élastiquement déformable (15) de l'élément intermédiaire (10) d'effectuer un mouvement lui permettant de se désengager dudit relief (5).

30. Procédé selon la revendication 28, **caractérisé par le fait que** l'on préassemble l'élément rapporté (30) et l'élément intermédiaire (10) avant de mettre en place ce dernier sur le relief, **par le fait que** l'on fixe ensuite l'élément intermédiaire (10) sur le relief et **par le fait que** l'on déplace enfin l'élément rapporté par rapport à l'élément intermédiaire de manière à ce que l'élément rapporté empêche la partie élastiquement déformable (15) de l'élément intermédiaire (10) d'effectuer un mouvement lui permettant de se désengager dudit relief (5).

## Patentansprüche

1. Fahrzeugkraftstofftank, einen Mantel (1) und mindestens ein im Innern dieses Mantels (1) angeordnetes Ansatzelement (30) wie z.B. ein Ventil umfassend, wobei der Mantel (1) eine Ausstülpung ausbildet (5, 41, 41') und das Ansatzelement (30) auf dem Mantel (1) mittels eines Zwischenelements (10, 10') befestigt wird, das mindestens einen elastisch verformbaren Teil (15) umfasst, das so ausgebildet ist, dass es mittels elastischer Verformung in oder auf der Ausstülpung (5, 41, 41') befestigt werden kann, um das Zwischenelement (10, 10') auf dem Mantel zu befestigen, **dadurch gekennzeichnet, dass** das Ansatzelement (30) dazu ausgebildet ist, am Zwischenelement (10, 10') befestigt zu werden, wobei es den elastisch verformbaren Teil (15) des Zwischenelements (10, 10') daran hindert, sich in entgegen gesetzter Richtung elastisch zu verformen und sich auf diese Weise von der Ausstülpung (5, 41, 41') zu lösen.

2. Tank nach dem vorstehenden Anspruch, **dadurch gekennzeichnet, dass** die Ausstülpung (5) eine Aufnahme (2) ausbildet, in die der elastisch verformbare Teil (15) des Zwischenelements (10) eingreift.

3. Tank nach dem vorstehenden Anspruch, **dadurch gekennzeichnet, dass** die Aufnahme (2) einen seitlichen Durchgang (4) ausbildet, die es ermöglicht, eine laterale Verlängerung (31) des Zwischenelements (10) oder des Ansatzelements (30) aufzunehmen.

4. Tank nach dem vorstehenden Anspruch, **dadurch gekennzeichnet, dass** die laterale Verlängerung (31) als Ansatzstück (31) am Ansatzelements (30) ausgebildet ist.

5. Tank nach dem vorstehenden Anspruch, **dadurch gekennzeichnet, dass** der Durchgang (4) durch zum Ansatzstück (31) etwa parallele Wände (4a, 4b) begrenzt wird.

6. Tank nach einem der Ansprüche 2 bis 5, **dadurch gekennzeichnet, dass** die Öffnung (3) der Aufnahme (2), durch die das Zwischenelement (10) eingeführt wird, nicht rotationssymmetrisch ist.

7. Tank nach einem der Ansprüche 2 bis 5, **dadurch gekennzeichnet, dass** die Öffnung der Aufnahme (43) rotationssymmetrisch ist.

8. Tank nach einem der Ansprüche 2 bis 7, **dadurch gekennzeichnet, dass** das Zwischenelement (10, 10') so ausgebildet ist, dass es in Richtung seiner Längsachse in die Aufnahme (2) einrasten kann.

9. Tank nach einem der Ansprüche 2 bis 8, **dadurch gekennzeichnet, dass** das Zwischenelement (10) elastisch verformbare Befestigungsklammern (17a, 17b, 17c, 17d) ausbildet, die dazu vorgesehen sind, in die Aufnahme (2) einzurasten.

10. Tank nach einem der Ansprüche 2 bis 9, **dadurch gekennzeichnet, dass** das Zwischenelement (10) mindestens zwei elastische Klammern (17a, 17c, 17b, 17d) aufweist, die einen Zwischenraum einschließen, und die dazu vorgesehen sind, in die Aufnahme (2) einzurasten, und das Ansatzelement (30) einen Teil (33) umfasst, der dazu geeignet ist, so in diesen Zwischenraum einzugreifen, dass die Klammern (17a, 17c, 17b, 17d) daran gehindert werden, sich aufeinander zu zu bewegen und sich aus der Aufnahme (2) zu lösen.

11. Tank nach dem vorstehenden Anspruch, **dadurch gekennzeichnet, dass** das Zwischenelement (10) zwei einander gegenüber liegende elastische Klammernpaare (17a, 17b, 17c, 17d) aufweit, wobei die Klammern ein und desselben Paars (17a, 17b, 17c, 17d) so angeordnet werden, dass sie mit ein und derselben Seite (2a, 2b) der Aufnahme (2) in Berührung kommen.

12. Tank nach Anspruch 10, wobei sich das Zwischenelement (10) entlang einer Längsachse (W) erstreckt, **dadurch gekennzeichnet, dass** das Zwischenelement (10') eine Vielzahl elastischer Klammern (17') aufnimmt, die jeweils im gleichen Winkelabstand voneinander um diese Längsachse (W) angeordnet sind.

13. Tank nach einem der Ansprüche 9 bis 13, **dadurch gekennzeichnet, dass** die Aufnahme (2) im Querschnitt die Form eines Schwalbenschwanzes annimmt und die Klammern (17a, 17b, 17c, 17d) eine nach außen geknickte flache Form aufweisen, die etwa mit der Form der Innenseiten (2a, 2b) der Aufnahme (2) übereinstimmt.

14. Tank nach einem der vorstehenden Ansprüche, **dadurch gekennzeichnet, dass** das Ansatzelement (30) dazu ausgebildet ist, um auf dem Zwischenelement (10) einzurasten.

15. Tank nach einem der vorstehenden Ansprüche, **dadurch gekennzeichnet, dass** das Zwischenelement (10) einen Rohrkörper (11) aufweist, an dessen einem Ende das elastisch verformbare Element (15) angeordnet ist, wobei das Ansatzelement (30) dazu ausgebildet ist, im Innenraum dieses Rohrkörpers (11) befestigt zu werden.

16. Tank nach einem der vorstehenden Ansprüche, **dadurch gekennzeichnet, dass** das Zwischenelement (10) und das Ansatzelement (30) zusammenwirkende Ausstülpungen ausbilden, die eine Vormontage des Ansatzelements (30) im Zwischenelement (10) zu ermöglichen, bevor dieses am Mantel (10) des Tanks befestigt wird.

17. Tank nach Anspruch 15 und ggf. nach Anspruch 16, **dadurch gekennzeichnet, dass** der Rohrkörper des Zwischenelements (10) Aussparungen (12a, 12b) und das Ansatzelement (30) Zähne (32) zum Einrasten in diese Aussparungen (12a, 12b) aufweisen.

18. Tank nach Anspruch 16, **dadurch gekennzeichnet, dass** das Zwischenelement eine erste Aussparungsgruppe (12b) ausbildet, die so ausgebildet ist, dass sie den Halt des Ansatzelements (30) in einer ersten Stellung relativ zum Zwischenelement (10) gewährleistet, wobei das Zwischenelement (10) in dieser Stellung des Ansatzelements (30) auf dem Mantel (1) des Tanks montiert werden kann, und eine zweite Aussparungsgruppe (12a) zum Halt des Ansatzelements (30) im Zwischenelement in einer zweiten Stellung relativ zum Zwischenelement (10) ausbildet, wobei in dieser zweiten Stellung das Ansatzelement (30) das Zwischenelement (10) daran hindert, sich vom Mantel (1) des Tanks zu lösen.

19. Tank nach Anspruch 15 und einem der Ansprüche 16 bis 18, **dadurch gekennzeichnet, dass** das Ansatzelement (30) ein Ansatzstück (31) aufweist und der Rohrkörper (11) für den Durchlass dieses Ansatzstücks (31) mit einem Fenster (13) versehen ist.

20. Tank nach dem vorstehenden Anspruch, **dadurch gekennzeichnet, dass** sich das Fenster (13) im Rücksprung zu dem Ende des Rohrkörpers (11) befindet, das gegenüber dem elastisch verformbaren Teil (15) angeordnet ist.

21. Tank nach einem der vorstehenden Ansprüche, **dadurch gekennzeichnet, dass** der Mantel (1) durch Ausblasen eines thermoplastischen Werkstoffs gebildet wird.

22. Tank nach dem vorstehenden Anspruch, **dadurch gekennzeichnet, dass** der Mantel mindestens eine Schicht aufweist, die eine Sperre für Kohlenwasserstoffe bildet.

23. Tank nach einem der beiden vorstehenden Ansprüche, **dadurch gekennzeichnet, dass** die Ausstülpung (5) beim Aufblasen mittels einer vorbestimmten Form hergestellt wird.

24. Tank nach einem der Ansprüche 21 und 23, **dadurch gekennzeichnet, dass** die Ausstülpung (5) durch die Einformung einer Einlage hergestellt wird.

25. Tank nach einem der Ansprüche 1 bis 22, **dadurch gekennzeichnet, dass** die Ausstülpung (5) hergestellt wird, indem auf die Oberfläche des Mantels (1) ein Befestigungsorgan aufgesetzt wird.

26. Tank nach dem vorstehenden Anspruch, **dadurch gekennzeichnet, dass** dieses Befestigungsorgan mit der Oberfläche des Mantels (1) verschweißt wird.

27. Tank nach einem der vorstehenden Ansprüche, **dadurch gekennzeichnet, dass** das Ansatzelement (30) als Ventil ausgebildet ist.

28. Fertigungsverfahren für einen Kraftstofftank für ein Fahrzeug, die nachstehenden Verfahrensschritte umfassend:
a) Ausbilden eines Mantels (1) durch Kunststoffformung insbesondere durch Ausblasen, Thermoformen, Drehformen oder Einspritzformen eines thermoplastischen Stoffes,
b) Ausbilden einer Ausstülpung (5) in dem Mantel (1) während oder nach der Formung des Mantels (1),
c) Befestigung eines Zwischenelements (10), das mindestens einen elastisch verformbaren Teil (15) ausbildet, der dazu vorgesehen ist, durch elastische Verformung in oder auf dieser Ausstülpung (5) einzugreifen und das Zwischenelement (10) auf dem Mantel (1) zu befestigen,
d) Befestigung eines Ansatzelements (30) auf dem Mantel (1) des Tanks gleichzeitig mit dem Zwischenelement (10) oder in einer zweiten Phase, **dadurch gekennzeichnet, dass** dieses Ansatzelement (30) dazu vorgesehen ist, den elastisch verformbaren Teil (15) des Zwischenelements (10) daran zu hindern, eine Bewegung auszuführen, die es ihm ermöglicht, sich von der Ausstülpung (5) zu lösen.

29. Verfahren nach dem vorstehenden Anspruch, **dadurch gekennzeichnet, dass** das Ansatzelement (30) auf dem Zwischenelement (10) befestigt wird, nachdem das Zwischenelement (10) auf dem Mantel (1) des Tanks angeordnet wurde, um das elastisch verformbare Teil (15) des Zwischenelements (10) daran zu hindern, eine Bewegung auszuführen, die es ihm ermöglicht, sich von der Ausstülpung (5) zu lösen.

30. Verfahren nach Anspruch 28, **dadurch gekennzeichnet, dass** das Ansatzelement (30) auf dem Zwischenelement (10) vormontiert wird, bevor dieses auf dem Mantel (1) des Tanks befestigt wird, dass das Zwischenelement (10) danach auf der Ausstülpung (5) befestigt wird und dass das Ansatzelement (30) schließlich relativ zum Zwischenelement (10) verschoben wird, so dass das Ansatzelement den elastisch verformbaren Teil (15) des Zwischenelements (10) daran hindert, eine Bewegung auszuführen, die es ihm ermöglicht, sich von der Ausstülpung (5) zu lösen.

## Claims

1. A motor vehicle fuel tank comprising a shell (1), and inside the shell at least one add-on element (30) such as a valve, the shell (1) presenting a portion in relief (5; 41; 41'), the add-on element (30) being connected to the shell by means of an intermediate element (10; 10') including at least one elastically-deformable portion (15) arranged to engage, after being elastically-deformed, in or on said portion in relief (5; 41; 41') so as to hold the intermediate element (10; 10') to the shell, **characterized by** the fact that the add-on element (30) is arranged so as to be connected to the intermediate element (10; 10') in such a manner as to prevent the elastically-deformable portion (15) of the intermediate element (10; 10') from being subjected to inverse elastic deformation enabling it to become disengaged from said portion in relief (5; 41; 41').

2. A tank according to the preceding claim, **characterized by** the fact that said portion in relief (5) defines a housing (2) in which the elastically-deformable portion (15) of the intermediate element (10) is suitable for being engaged.

3. A tank according to the preceding claim, **characterized by** the fact that the housing (2) communicates with a lateral passage (4) enabling a lateral extension (31) of the intermediate element (10) or of the add-on element (30) to be received.

4. A tank according to the preceding claim, **characterized by** the fact that the lateral extension (31) is constituted by an endpiece (31) on the add-on element (30).

5. A tank according to the preceding claim, **characterized by** the fact that the passage (4) is defined by walls (4a, 4b) that are substantially parallel to the axis of the endpiece.

6. A tank according to any one of claims 2 to 5, **characterized by** the fact that the opening (3) of the housing (2) through which the intermediate element (10) is inserted is not circularly-symmetrical.

7. A tank according to any one of claims 2 to 5, **characterized by** the fact that the opening of the housing (43) is circularly-symmetrical.

8. A tank according to any one of claims 2 to 7, **characterized by** the fact that the intermediate element (10; 10') is arranged to snap into said housing in the axial direction thereof.

9. A tank according to any one of claims 2 to 8, **characterized by** the fact that the intermediate element (10) includes elastically-deformable connection tabs (17a, 17b, 17c, 17d) suitable for snap-fastening in the housing (2).

10. A tank according to any one of claims 2 to 9, **characterized by** the fact that the intermediate element (10) has at least two resilient tabs (17a, 17c; 17b, 17d) leaving a gap between them and arranged to snap-fasten in the housing (2), and by the fact that the add-on element (30) includes a portion (33) suitable for engaging in said gap so as to prevent the tabs from moving towards each other and becoming disengaged from the housing.

11. A tank according to the preceding claim, **characterized by** the fact that the intermediate element has two pairs of resilient tabs (17a, 17b; 17c, 17d), facing each other, the tabs in any one pair (17a, 17b; 17c, 17d) being placed in such a manner as to come into contact with the same face (2a; 2b) of the housing (2).

12. A tank according to claim 10, in which the intermediate element extends along a longitudinal axis (W) and **characterized by** the fact that the intermediate element (10') includes a plurality of resilient tabs (17') disposed at equal angles around said longitudinal axis (W).

13. A tank according to any one of claims 9 to 13, **characterized by** the fact that the housing (2) has a section of dovetail shape, and by the fact that the tabs (17a, 17b, 17c, 17d) are flat in shape, being angled outwards so as to match substantially the shape of the inside faces (2a; 2b) of the housing (2).

14. A tank according to any preceding claim, **characterized by** the fact that the add-on element (30) is arranged to snap-fasten to the intermediate element (10).

15. A tank according to any preceding claim, **characterized by** the fact that the intermediate element (10) has a tubular body (11) with the elastically-deformable portion (15) at one end, and by the fact that the add-on element (30) is arranged to be connected inside said tubular body (11).

16. A tank according to any preceding claim, **characterized by** the fact that the intermediate element and the add-on element have portions in relief that are arranged to co-operate and to allow the add-on element to be preassembled in the intermediate element prior to connection thereof to the shell of the tank.

17. A tank according to claim 15 and possibly claim 16, **characterized by** the fact that the tubular body of the intermediate element includes recesses (12a, 12b) and the add-on element has teeth (32) suitable for snap-fastening in said recesses (12a, 12b).

18. A tank according to claim 16, **characterized by** the fact that the intermediate element has a first set of recesses (12b) disposed in such a manner as to enable the add-on element (30) to be held in a first position relative to the intermediate element (10) suitable for enabling the intermediate element to be put into place on the shell of the tank, and a second set of recesses (12a) enabling the add-on element to be held in the intermediate element in a second position relative to the intermediate element (10), said second position of the add-on element preventing the intermediate element from becoming detached from the shell of the tank.

19. A tank according to claim 15 and any one of claims 16 to 18, **characterized by** the fact that the add-on element (30) has an endpiece (31), and by the fact that the tubular body (11) includes a window (13) for passing said endpiece (31).

20. A tank according to the preceding claim, **characterized by** the fact that the window (13) is set back from the end of the tubular body (11) that is remote from the elastically-deformable portion (15).

21. A tank according to any preceding claim, **characterized by** the fact that the shell (1) is made by blowing a thermoplastic material.

22. A tank according to the preceding claim, **characterized by** the fact that the shell includes at least one layer that forms a barrier against hydrocarbons.

23. A tank according to either one of the two immediately preceding claims, **characterized by** the fact that the portion in relief (5) is obtained by means of a predetermined shape given to the blow mold.

24. A tank according to claim 21 or claim 23, **characterized by** the fact that the portion in relief is obtained by overmolding an insert.

25. A tank according to any one of claims 1 to 22, **characterized by** the fact that the portion in relief is obtained by fitting a connection member to the surface of the shell.

26. A tank according to the preceding claim, **characterized by** the fact that said connection member is heat-sealed to said surface.

27. A tank according to any preceding claim, **characterized by** the fact that the add-on element (30) is constituted by a valve.

28. A method of manufacturing a motor vehicle fuel tank, the method comprising the following steps:
a) making a shell (1) by shaping a plastics material, in particular by blowing, thermoforming, rotomolding, or injection molding a thermoplastic material;
b) making a portion in relief (5) on the shell, during or after formation of the shell;
c) connecting an intermediate element (10) to said portion in relief (5), the intermediate element being provided with at least one elastically-deformable portion (15) arranged to engage by resilient deformation in or on said portion in relief so as to hold the intermediate element (10) to the shell (1); and
d) connecting an add-on element (30) to the shell of the tank at the same time as the intermediate element or thereafter, the method being **characterized by** the fact that said add-on element (30) is suitable for preventing the elastically-deformable portion (15) of the intermediate element (10) from moving in such a manner as to enable it to become disengaged from said portion in relief (5).

29. A method according to the immediately preceding claim, **characterized by** the fact that the add-on element (30) is connected to the intermediate element (10) after the intermediate element has been put into place on the shell of the tank so as to prevent the elastically-deformable portion (15) of the intermediate element (10) from performing a movement that enables it to become disengaged from said portion in relief (5).

30. A method according to claim 28, **characterized by** the fact that the add-on element (30) and the intermediate element (10) are preassembled before the intermediate element is put into place on the portion in relief, by the fact that the intermediate element (10) is then connected to the portion in relief, and by the fact that the add-on element is finally moved relative to the intermediate element in such a manner that the add-on element prevents the elastically-deformable portion (15) of the intermediate element (10) from moving in such a way as to enable it to become disengaged from said portion in relief (5).
